# EUROPÄISCHE PATENTSCHRIFT

(11) **EP 3 603 971 B1**
(45) Veröffentlichungstag und Bekanntmachung des Hinweises auf die Patenterteilung: **14.09.2022**
(21) Anmeldenummer: 19189223.1
(22) Anmeldetag: 30.07.2019
(51) Int. Cl.: B33Y 10/00, B27N 5/00, B33Y 80/00, B27N 9/00, E04C 2/20, E04C 2/32

(54) **BAUELEMENT, WANDELEMENT FÜR EIN BAUWERK UND VERFAHREN ZUM HERSTELLEN EINES BAUELEMENTES**
BUILDING ELEMENT, WALL ELEMENT FOR SAME AND METHOD FOR PRODUCING SAME
COMPOSANT, ÉLÉMENT MURAL POUR UN BÂTIMENT ET PROCÉDÉ DE FABRICATION D'UN COMPOSANT

(30) Priorität: 30.07.2018 DE 102018118402
(43) Veröffentlichungstag der Anmeldung: 05.02.2020
(73) Patentinhaber: Novo-Tech GmbH & Co. KG, 06449 Aschersleben (DE)
(72) Erfinder:
(74) Vertreter: Dantz, Jan Henning

(56) Entgegenhaltungen:
- DE-A1- 2 224 175
- US-A1- 2016 208 476
- US-A1- 2016 263 822

## Beschreibung

Die vorliegende Erfindung betrifft ein Bauelement, insbesondere Wandelement für ein Bauwerk, das aus einer Mischung aus einem Polymerwerkstoff und Füllmaterialien besteht und in einem 3D-Druckverfahren hergestellt ist, ein Wandelement für ein Bauwerk und ein Verfahren zum Herstellen eines Bauelementes.

Die EP 3 243 5633 A1 offenbart ein Verfahren zum schichtweisen Herstellen eines dreidimensionalen gedruckten Formkörpers, bei dem eine extrudierte Werkstoffschmelze verarbeitet wird, die über einen Druckkopf an der gewünschten Position ausgegeben werden kann. Die Werkstoffschmelze wird dabei mit einem fluiden Treibmittel unter Druck beladen, so dass das Treibmittel eine Vielzahl an Gasblasen in der Werkstoffschmelze beim oder nach dem Auftragen ausbildet, die zu einer Zellstruktur in der ausgehärteten Schicht führen. Dadurch können das Gewicht und die Isolierung verbessert werden. Das Beladen mit einem fluiden Treibmittel hat allerdings den Nachteil, dass die gebildeten Hohlkammern nicht exakt reproduzierbar sind, so dass es zu Schwankungen hinsichtlich der mechanischen Eigenschaften des Formkörpers kommen kann.

US 2016/0208476 offenbart ein Bauelement gemäß dem Oberbegriff des Anspruchs 1 und ein Verfahren gemäß dem Oberbegriff des Anspruchs 14; sie zeigt einen Stützkörper mit einer Vielzahl von fachwerkartig angeordneten Streben, die horizontale Gitterelemente verbinden.

DE 2 224 175 offenbart eine Isolierplatte mit hervorstehenden Auswölbungen Es ist daher Aufgabe der vorliegenden Erfindung, ein Bauelement und ein zugehöriges Herstellungsverfahren zu schaffen, das im 3D-Druckverfahren hergestellt ist und eine hohe Tragfähigkeit und gute Isoliereigenschaften aufweist. Diese Aufgabe wird mit einem Bauelement mit den Merkmalen des Anspruches 1 gelöst. Vorteilhafte Ausgestaltungen ergeben sich aus den Unteransprüchen. Das erfindungsgemäße Bauelement besteht aus einer Mischung aus einem Polymerwerkstoff und Füllmaterialien und ist in einem 3D-Druckverfahren hergestellt, wobei das Bauelement eine integral ausgebildete Fachwerkstruktur mit pyramidenförmigen Hohlkammern aufweist. Durch die Fachwerkstruktur können hohe Gewichtskräfte aufgenommen werden, wie dies gerade für Wände eines Bauwerkes erforderlich ist. Zudem ergeben sich durch die Hohlkammern gute Isoliereigenschaften für die Wärmedämmung bei geringem Eigengewicht, wobei die Eigenschaften eines solchen Bauelementes reproduzierbar durch ein 3D-Druckverfahren hergestellt werden können.

Vorzugsweise sind die Hohlkammern des Bauelementes der Fachwerkstruktur durch dreieckförmige Wandabschnitte begrenzt. Die Pyramiden können dabei eine Grundfläche aus einem regelmäßigen Polygon aufweisen, beispielsweise ist die Grundfläche dreieckförmig, quadratisch, fünfseitig oder sechsseitig. Die die Hohlkammern begrenzenden Wandabschnitte sind vorzugsweise durch gleichseitige Dreiecke gebildet, was die Tragfähigkeit bei einer mechanischen Belastung verbessert.

Vorzugsweise ist an einer Spitze einer pyramidenförmigen Hohlkammer ein Kreuzungspunkt mit mehreren dort angrenzenden Spitzen benachbarter Pyramiden vorgesehen. Ein solcher Kreuzungspunkt kann beispielsweise Spitzen von sechs bis 10 Pyramiden umfassen, wobei die Spitzen nicht unmittelbar aneinander anliegen, sondern über einen Abschnitt eines Wandelementes.

Vorzugsweise ist die Dicke der Wandabschnitte aus dem extrudierten Material aus einem Polymerwerkstoff und Füllmaterialien in einem Bereich zwischen 1 mm bis 40 mm, insbesondere 2 mm bis 20 mm, ausgebildet.

Das im 3D-Druck verarbeitete Material des Bauelementes weist vorzugsweise einen Anteil von mindestens 50 Gew.% an lignozellulosehaltigen Materialien auf. Als lignozellulosehaltige Materialien können insbesondere Holz, Holzfaser, Holzspäne, Bambus, Altpapier oder andere lignozellulosehaltige Materialien eingesetzt werden. Der Anteil an lignozellulisehaltigen Materialien kann beispielsweise zwischen 60 % bis 80 % liegen. Zusätzlich können weitere Füllmaterialien eingesetzt werden, insbesondere kann ein Flammschutzmittel eingesetzt werden, um das Bauelement sicherer gegen Feuer zu machen. Ein solches Brandschutzmittel kann beispielsweise Aluminiumhydroxid umfassen.

Die Hohlkammern können zumindest in einem inneren Bereich des Bauelementes vorzugsweise in Form einer Doppelpyramide ausgebildet sein, wobei zwei benachbarte Pyramiden dieselbe Grundfläche besitzen. Bevorzugt werden die Pyramiden mit quadratischer Grundfläche ausgebildet sein, es können aber auch andere Polyeder als Grundfläche eingesetzt werden.

Bei der Fachwerkstruktur des Bauelementes sind die zur Grundfläche geneigt angeordneten Wandabschnitte vorzugsweise in einem Winkel zwischen 25° bis 65°, insbesondere 35° bis 60°, zur Grundfläche ausgerichtet. Dadurch ergibt sich eine stabile Tragstruktur.

Mit dem erfindungsgemäßen Bauelement wird vorzugsweise ein Wandelement für ein Bauwerk, wie ein Gebäude, hergestellt. Ein solches Wandelement kann eine Breite besitze, bei der über die Breite verteilt zwischen 3 bis 20 pyramidenförmige Hohlkammern vorgesehen sind, insbesondere zwischen 4 bis 15 Hohlkammern.

Bei einem durch 3D-Druck hergestellten Wandelement aus mindestens einem Bauelement kann das Wandelement auch winkelförmige Abschnitte umfassen, die integral ausgebildet sind. Beim 3D-Druck kann dann die Fachwerkstruktur auch in dem winkelförmigen Abschnitt des Wandelements hergestellt werden. Ferner kann das Wandelement nur Wandabschnitte aufweisen, die zur Horizontalen geneigt ausgerichtet sind, so dass die Wandabschnitte besser im 3D-Druckverfahren hergestellt werden können.

Die Erfindung wird nachfolgend anhand zweier Ausführungsbeispiele mit Bezug auf die beigefügten Zeichnungen näher erläutert. Es zeigen:
- Figuren 1A und 1B: zwei Ansichten eines ersten erfindungsgemäßen Bauelementes in perspektivischen Ansichten;
- Figuren 2A bis 2D: mehrere Ansichten des Bauelementes der Figur 1, teilweise im Schnitt;
- Figur 3: eine perspektivische Ansicht eines zweiten Bauelementes, und
- Figuren 4A bis 4D: mehrere Ansichten des Bauelementes der Figur 3, teilweise im Schnitt.

Ein Bauelement 10 kann Teil eines Bauwerks sein, beispielsweise eines Wand- oder Deckenelementes, und ist in einem 3D-Druckverfahren hergestellt. Hierfür wird eine Mischung aus einem Polymerwerkstoff mit Füllmaterialien vorzugsweise über einen Extruder in eine flüssige Form gebracht, die dann über eine Düse des Druckers ausgegeben wird, um ein Bauelement 10 herzustellen. Das Material des Bauelementes 10 kann einen Polymeranteil von 10 bis 90 % aufweisen, vorzugsweise liegt der Polymeranteil in einem Bereich von 20 % bis 40 %. Als Polymere können Polyethylen, Polypropylen oder Polyvinylchlorid eingesetzt werden, aber auch andere Polymere. Als Füllstoffe werden vorzugsweise lignozellulosehaltige Fasern, also zerkleinerte Holzwerkstoffe, aber auch Bambus, Reisschalen oder andere lignozellulosehaltige Materialien, eingesetzt. Dem Material können zudem Materialien zugegeben werden, die die Brennbarkeit herabsetzen.

Das Bauelement 10 umfasst Hohlkammern 11, die pyramidenförmig ausgestaltet sind. Eine Pyramide besitzt dabei eine Grundfläche, die als Polyeder ausgebildet ist und an Seitenflächen durch Wandabschnitte 12 begrenzt ist, wobei alle Wandabschnitte 12 dreieckförmig ausgebildet sind. Die Wandabschnitte 12 erstrecken sich dabei vorzugsweise in einem Winkel zwischen 25° und 65° zu der Grundfläche. Die Grundfläche kann optional mit einem Bodenwandabschnitt begrenzt sein, vorzugsweise ist die Grundfläche der pyramidenförmigen Hohlkammer jedoch nicht mit Material gebildet.

Die pyramidenförmigen Hohlkammern besitzen jeweils eine Spitze, die einen Knotenpunkt oder Kreuzungspunkt 13 bildet, an dem sich mehrere Spitzen benachbarter Pyramiden treffen. Beispielsweise können sich zwischen 4 bis 10 pyramidenförmige Hohlkammern 11 an einem Kreuzungspunkt 13 treffen. Zwischen benachbarten Kreuzungspunkten 13 sind Stege 14 ausgebildet, die Stirnkanten der Wandabschnitte 12 sind, die eine Seitenfläche einer pyramidenförmigen Hohlkammer 11 ausbilden.

Die Dicke d der Wandabschnitte 12 liegt beispielsweise in einem Bereich zwischen 1 mm bis 40 mm, insbesondere in einem Bereich zwischen 2 mm bis 20 mm. Die Höhe einer pyramidenförmigen Hohlkammer kann, je nach Einsatzzweck, zwischen 10 mm bis 100 mm betragen, vorzugsweise zwischen 20 mm bis 80 mm.

In dem dargestellten Ausführungsbeispiel besitzen die pyramidenförmigen Hohlkammern 11 eine quadratische Grundfläche und somit vier dreieckförmig ausgebildete Wandabschnitte 12, die sich an einer Spitze treffen. Auch andere Formen der Hohlkammern 11 können für das Bauelement 10 eingesetzt werden.

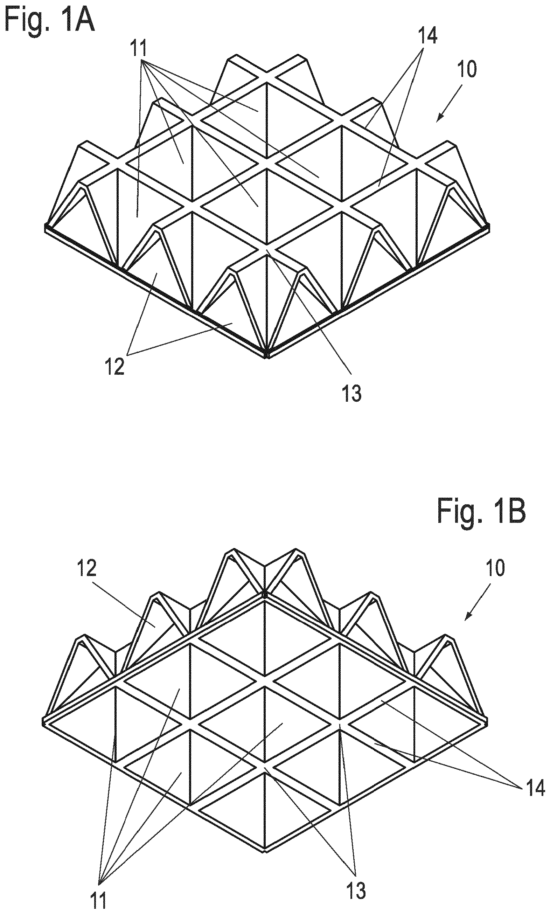

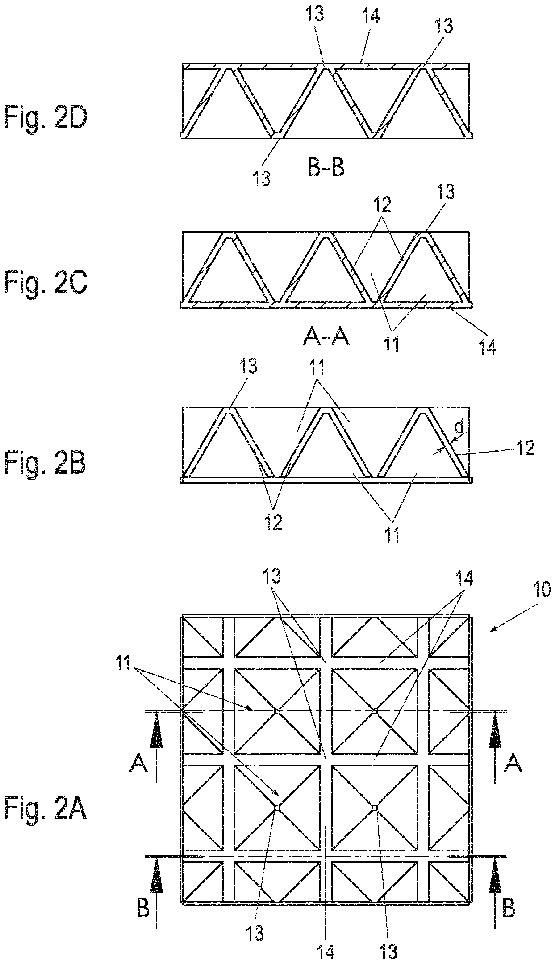

In den Figuren 1A bis 2D ist ein Bauelement 10 gezeigt, das pyramidenförmige Hohlkammern 11 in einer Ebene aufweist. Zur Herstellung eines Wandelementes oder eines anderen Formteils werden vorzugsweise Bauelemente eingesetzt, die mehrere Ebenen von Hohlkammern 11 aufweisen.

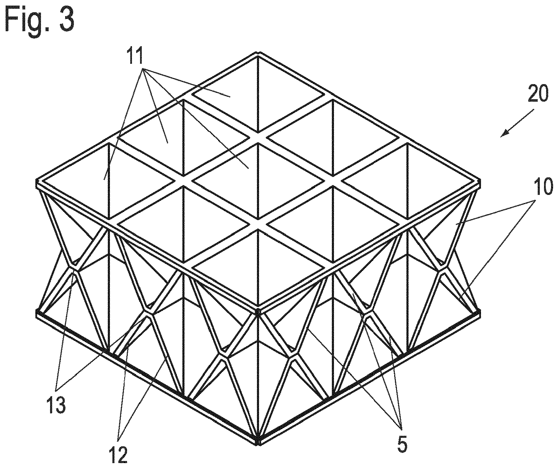

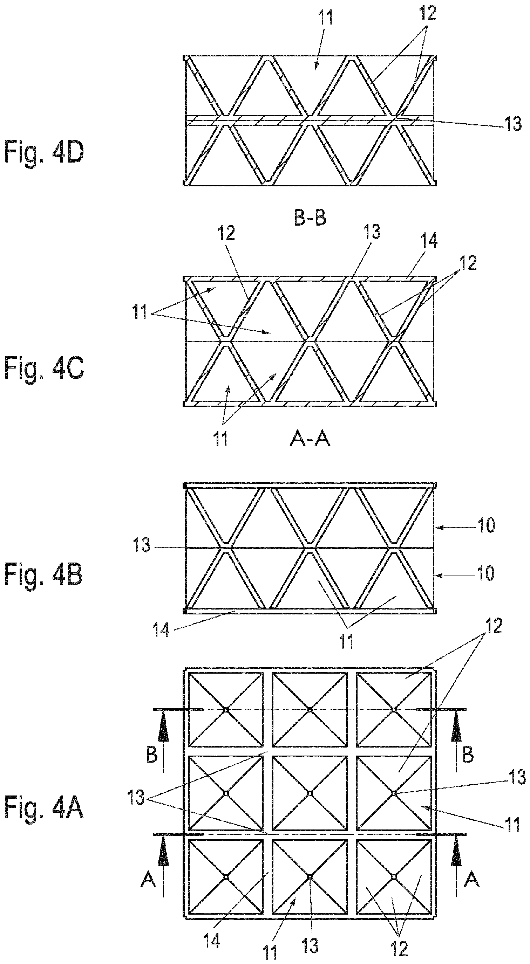

In den Figuren 3 bis 4D ist ein Bauelement 20 gezeigt, das Hohlkammern 11 in zwei Ebenen aufweist. Das Bauelement 20 ist aus zwei Bauelementen 10 zusammengesetzt, die den Figuren 1A bis 2D gezeigt sind. Die Bauelemente 10 und 20 sind im 3D-Druckverfhren hergestellt, so dass die zwei Bauelemente 10 des Bauelementes 20 integral miteinander ausgebildet sind, auch wenn in den Zeichnungen zur Erläuterung eine Trennlinie zwischen den beiden Bauelementen 10 eingezeichnet ist. Auch das Bauelement 20 umfasst pyramidenförmige Hohlkammern und dreieckförmige Wandabschnitte 12, wie dies für das Bauelement 10 erläutert wurde. Durch die Anordnung von zwei Ebenen von Hohlkammern 11 werden im mittleren Bereich Hohlkammern 11 in der Form einer Doppelpyramide ausgebildet, bei denen zwei Pyramiden die gleiche Grundfläche besitzen. Die Grundfläche ist dabei nicht durch Material des Bauelementes gebildet, sondern nur eine gedachte Ebene, um die Form der Hohlkammern 11 besser beschreiben zu können.

In den Figuren 3 bis 4D sind zwei Bauelemente 10 zusammengefügt, um ein größeres Bauelement 20 zu bilden. Es ist für die Herstellung eines Wandelementes, beispielsweise für Gebäude, möglich, die Anzahl der Ebenen an Hohlkammern 11 weiter zu erhöhen, beispielsweise können zwischen 3 bis 30 Hohlkammern 11 in verschiedenen Ebenen angeordnet sein. Vorzugsweise werden für Wandelemente zwischen 3 bis 20, insbesondere 4 bis 15, Ebenen mit Hohlkammern 11 gebildet. Dadurch ergibt sich eine sehr tragfähige Fachwerkstruktur mit guter Wärmeisolierung.

Die Bauelemente 10 und 20 können zudem statt plattenförmig auch winkelförmig hergestellt werden. Dadurch lassen sich Wandelemente ebenfalls in Winkelform herstellen, die aus den oben beschriebenen Bauelementen 10 und 20 hergestellt sind. Mit einem 3D-Druckverfahren lässt sich somit ein winkelförmiges Wandelement herstellen, das eine entsprechende integral ausgebildete Fachwerkstruktur besitzt. Die Fachwerkstruktur kann sich auch durchgängig durch alle vier oder mehr Wände eines Gebäudes ziehen, wenn aus dem Wandelement eine Gebäudehülle hergestellt wird, die in Draufsicht rahmenförmig ausgebildet ist.

### Bezugszeichenliste

- 10: Bauelement
- 11: Hohlkammer
- 12: Wandabschnitt
- 13: Kreuzungspunkt
- 14: Steg
- 20: Bauelement

- d: Dicke

## Patentansprüche

1. Bauelement (10, 20), insbesondere Wandelement für ein Bauwerk, das aus einer Mischung aus einem Polymerwerkstoff und Füllmaterialien besteht und in einem 3D-Druckverfahren hergestellt ist, wobei das Bauelement (10, 20) eine integral ausgebildete Fachwerkstruktur aufweist, **dadurch gekennzeichnet, dass** die Fachwerkstruktur pyramidenförmige Hohlkammern (11) aufweist.

2. Bauelement nach Anspruch 1, **dadurch gekennzeichnet, dass** die Hohlkammern (11) der Fachwerkstruktur durch dreieckförmige Wandabschnitte (12) begrenzt sind.

3. Bauelement nach Anspruch 1 oder 2, **dadurch gekennzeichnet, dass** an einer Spitze einer pyramidenförmigen Hohlkammer (11) Kreuzungspunkte (13) mehrerer dort angrenzender Spitzen benachbarter pyramidenförmiger Hohlkammern (11) vorgesehen sind.

4. Bauelement nach Anspruch 3, **dadurch gekennzeichnet, dass** sich an einem Kreuzungspunkt (3) die Spitzen von sechs bis zehn Pyramiden treffen.

5. Bauelement nach einem der vorhergehenden Ansprüche, **dadurch gekennzeichnet, dass** die Dicke (d) der Wandabschnitte (12) im Bereich zwischen 1 mm bis 40, insbesondere 2 mm bis 20mm, liegt.

6. Bauelement nach einem der vorhergehenden Ansprüche, **dadurch gekennzeichnet, dass** das in dem 3D-Druck verarbeitete Material des Bauelementes einen Anteil von mindestens 50 % eines lignozellulosehaltigen Materials enthält.

7. Bauelement nach einem der vorhergehenden Ansprüche, **dadurch gekennzeichnet, dass** zumindest ein Teil der Hohlkammern (11) in Form einer Doppelpyramide ausgebildet sind, bei der die Grundflächen zweier Pyramiden identisch sind.

8. Bauelement nach einem der vorhergehenden Ansprüche, **dadurch gekennzeichnet, dass** zumindest ein Teil der Hohlkammern (11) in Form einer Pyramide mit quadratischer Grundfläche ausgebildet sind.

9. Bauelement nach einem der vorhergehenden Ansprüche, **dadurch gekennzeichnet, dass** jede pyramidenförmige Hohlkammer (11) eine Grundfläche umfasst und die von der Grundflächen anstehenden Wandabschnitte sich in einem Winkel zwischen 25° bis 65°, insbesondre 30° bis 60°, zur Grundfläche erstrecken.

10. Wandelement für ein Bauwerk, **dadurch gekennzeichnet, dass** das Wandelement aus mindestens einem Bauelement (10, 20) nach einem der vorhergehenden Ansprüche gebildet ist.

11. Wandelement nach Anspruch 10, **dadurch gekennzeichnet, dass** das Wandelement über die Breite zwischen 3 bis 20, insbesondere zwischen 4 bis 15, pyramidenförmige Hohlkammern (11) aufweist.

12. Wandelement nach Anspruch 10 oder 11, **dadurch gekennzeichnet, dass** das Wandelement einen winkelförmigen Abschnitt umfasst, der aus einem integral ausgebildeten Bauelement ausgebildet ist.

13. Wandelement nach einem der Ansprüche 10 bis 12, **dadurch gekennzeichnet, dass** das Wandelement nur aus Wandabschnitten (12) gebildet ist, die zur Horizontalen geneigt ausgerichtet sind.

14. Verfahren zur Herstellung eines Bauelementes nach den Ansprüchen 1 bis 9, mit den folgenden Schritten:
- Bereitstellen einer Mischung aus einem Polymerwerkstoff und Füllmaterialien;
- Verarbeiten der Mischung mit einem 3D-Drukverfahren, und
- Drucken eines Bauelementes (10, 20) mit einer integral ausgebildeten Fachwerkstruktur **dadurch gekennzeichnet, dass** die Fachwerkstruktur pyramidenförmige Hohlkammern aufweist.

## Claims

1. Building element (10, 20), in particular wall element for a building structure, which consists of a mixture of a polymer material and filling materials and is produced in a 3D printing process, wherein the building element (10, 20) has an integrally formed framework structure, **characterized in that** the framework structure has pyramid-shaped hollow chambers (11).

2. Building element according to claim 1, **characterized in that** the hollow chambers (11) of the framework structure are delimited by triangular wall sections (12).

3. Building element according to claim 1 or 2, **characterized in that** at a tip of a pyramid-shaped hollow chamber (11), intersection points (13) of a plurality of tips of adjacent pyramid-shaped hollow chambers (11) adjoining there are provided.

4. Building element according to claim 3, **characterized in that** the tips of six to ten pyramids meet at an intersection point (3).

5. Building element according to one of the preceding claims, **characterized in that** the thickness (d) of the wall sections (12) is in the range between 1 mm to 40 mm, in particular 2 mm to 20 mm.

6. Building element according to one of the preceding claims, **characterized in that** the material of the building element processed in the 3D printing contains a proportion of at least 50% of a lignocellulose-containing material.

7. Building element according to one of the preceding claims, **characterized in that** at least a part of the hollow chambers (11) are formed in the shape of a double pyramid, in which the base surfaces of two pyramids are identical.

8. Building element according to one of the preceding claims, **characterized in that** at least a part of the hollow chambers (11) are formed in the shape of a pyramid with a square base surface.

9. Building element according to one of the preceding claims, **characterized in that** each pyramid-shaped hollow chamber (11) comprises a base surface and the wall sections projecting from the base surface extend at an angle of between 25° and 65°, in particular 30° to 60°, to the base surface.

10. Wall element for a building structure, **characterized in that** the wall element is formed from at least one building element (10, 20) according to one of the preceding claims.

11. Wall element according to claim 10, **characterized in that** the wall element has between 3 to 20, in particular between 4 to 15, pyramid-shaped hollow chambers (11) over the width.

12. Wall element according to claim 10 or 11, **characterized in that** the wall element has an angular portion formed from an integrally formed building element.

13. Wall element according to one of claims 10 to 12, **characterized in that** the wall element is formed only of wall sections (12) oriented inclined to the horizontal.

14. Method for manufacturing a building element according to claims 1 to 9, comprising the following steps:
- providing a mixture of a polymeric material and filler materials;
- processing the mixture with a 3D printing process, and
- printing a building element (10, 20) having an integrally formed framework structure,
**characterized in that** the framework structure has pyramid-shaped hollow chambers.

## Revendications

1. Élément de construction (10, 20), en particulier élément de paroi pour un ouvrage bâti, composé d'un mélange d'un matériau polymère et de matériaux de charge et fabriqué par un procédé d'impression 3D, lequel élément de construction (10, 20) présente une structure en treillis intégrée, **caractérisé en ce que** la structure en treillis présente des compartiments creux pyramidaux (11).

2. Élément de construction selon la revendication 1, **caractérisé en ce que** les compartiments creux (11) de la structure en treillis sont délimités par des sections de paroi triangulaires (12).

3. Élément de construction selon la revendication 1 ou 2, **caractérisé en ce que** sont prévus à une pointe d'un compartiment creux pyramidal (11) des points d'intersection (13) de plusieurs pointes de compartiments creux pyramidaux (11) voisins qui s'y trouvent contiguës.

4. Élément de construction selon la revendication 3, **caractérisé en ce que** les pointes de six à dix pyramides se rencontrent en un point d'intersection (3).

5. Élément de construction selon l'une des revendications précédentes, **caractérisé en ce que** l'épaisseur (d) des parties de paroi (12) est comprise entre 1 mm et 40, en particulier entre 2 mm et 20 mm.

6. Élément de construction selon l'une des revendications précédentes, **caractérisé en ce que** le matériau de l'élément de construction mis en œuvre dans l'impression 3D contient une proportion d'au moins 50 % d'un matériau contenant de la lignocellulose.

7. Élément de construction selon l'une des revendications précédentes, **caractérisé en ce qu'**au moins une partie des compartiments creux (11) ont la forme d'une double pyramide, dans laquelle les surfaces de base des deux pyramides sont identiques.

8. Élément de construction selon l'une des revendications précédentes, **caractérisé en ce qu'**au moins une partie des compartiments creux (11) ont la forme d'une pyramide avec une surface de base carrée.

9. Élément de construction selon l'une des revendications précédentes, **caractérisé en ce que** chaque compartiment creux pyramidal (11) comporte une surface de base et les parties de paroi partant des surfaces de base s'étendent sous un angle compris entre 25° et 65°, en particulier entre 30° et 60°, par rapport à la surface de base.

10. Élément de paroi pour un ouvrage bâti, **caractérisé en ce qu'**il est formé d'au moins un élément de construction (10, 20) selon l'une des revendications précédentes.

11. Élément de paroi selon la revendication 10, **caractérisé en ce qu'**il présente sur sa largeur entre 3 et 20, en particulier entre 4 et 15 compartiments creux pyramidaux (11).

12. Élément de paroi selon la revendication 10 ou 11, **caractérisé en ce qu'**il comprend une partie en angle qui est formée d'un élément de construction intégré.

13. Élément de paroi selon l'une des revendications 10 à 12, **caractérisé en ce qu'**il est formé seulement de parties de paroi (12) orientées avec une inclinaison par rapport à l'horizontale.

14. Procédé pour la fabrication d'un élément de construction selon les revendications 1 à 9, comprenant les étapes suivantes :
- préparation d'un mélange d'un matériau polymère et de matériaux de charge ;
- mise en œuvre du mélange dans un procédé d'impression 3D et
- impression d'un élément de construction (10, 20) avec une structure en treillis intégrée,
**caractérisé en ce que** la structure en treillis présente des compartiments creux pyramidaux.
